# EUROPEAN PATENT APPLICATION

(11) **EP 4 417 302 A1**
(43) Date of publication of application: **21.08.2024**
(21) Application number: 23736590.3
(22) Date of filing: 06.01.2023
(51) Int. Cl.: B01J 23/78, B01J 23/745, B01J 23/86, B01J 23/83, B01J 23/75, B01J 23/42, B01J 23/58, C01C 1/04, B01J 35/10

(54) **POROUS AMMONIA SYNTHESIS CATALYST, AND PREPARATION METHOD THEREFOR AND USE THEREOF**

(71) Applicant: Zhejiang University, Hangzhou, Zhejiang 310058 (CN)
(72) Inventor: WU, Chuande, Hangzhou, Zhejiang 310058 (CN); YE, Jijie, Hangzhou, Zhejiang 310058 (CN)
(74) Representative: Luppi Intellectual Property S.r.l.
(86) International application number: PCT/CN2023/071010
(87) International publication number: WO 2024/145919

(57) **Abstract**

The present disclosure discloses a porous ammonia synthesis catalyst, its preparation method and use, which are suitable for catalyzing ammonia synthesis reaction by using nitrogen and hydrogen as raw materials. The porous ammonia synthesis catalyst is a novel ammonia synthesis catalyst material prepared by taking metal coordination compound as template, uniformly dispersing the metal coordination compound in silica gel through a sol-gel method, then carrying out hydrothermal aging, and finally controlling calcination conditions. Compared with traditional synthetic ammonia catalysts, the porous ammonia synthesis catalyst has uniform pore distribution, easily regulated pore size, large specific surface area, easily regulated aggregation degree of metal active centers, particle size, distribution, structure and composition, high ammonia synthesis catalytic efficiency, ammonia synthesis catalysis under mild reaction conditions, high stability, low catalyst preparation cost, which can completely replace existing ammonia synthesis industrial catalysts.

## Description

### TECHNICAL FIELD

The present disclosure relates to a technical field of preparing ammonia synthesis catalysts, and in particular, to a porous ammonia synthesis catalyst and its preparation method and use.

### BACKGROUND

Ammonia is one of the most important raw materials for synthetic chemical products and fertilizers, and has significant application prospects in a field of hydrogen storage in recent years. In 1904, Haber first used iron-based catalysts to prepare ammonia from hydrogen and nitrogen as raw materials under conditions of high temperature and high pressure. In 1913, its industrialization was achieved by Bosch. Subsequently, the research on ammonia synthesis has been widely concerned and developed rapidly. Almquist et al. studied the relationship between the activity of pure iron catalysts and iron components at different valence states, confirming that Fe₃O₄-based catalyst has the highest activity. Bridger et al. found that the introduction of Al₂O₃-K₂O double additives can greatly improve the catalytic activity of iron-based catalysts. In 1979, the British Imperial Chemical Industry Group took the lead in using cobalt oxide as an additive and developed the Fe₂Co-based catalyst, further improving the catalytic activity. In 1985, Huazhang LID et al. discovered that Fe₁₋ₓO-based catalysts with a Wustite structure had higher catalytic activity for ammonia synthesis and achieved industrialization. And in 1992, British Petroleum Company and Kellogg Corporation of America jointly developed the first ruthenium-based catalyst and its process (KAAP), the ruthenium-based catalyst is considered as the second-generation ammonia synthesis catalyst.

The iron-based catalyst for industrial ammonia synthesis is prepared by melting Fe₃O₄ with different types of accelerators, such as Al₂O₃, CaO, K₂O, at a temperature of about 2000K. The ammonia synthesis process needs to be carried out at a high temperature (400°C to 600°C) and high pressure (10MPa to 30MPa), and has the disadvantages of high energy consumption that accounts for 1% to 2% of global energy annually, and large emissions of greenhouse gases, such as CO₂. Harsh reaction conditions will further lead to serious sintering of the catalyst and loss of active sites. And Ruthenium based catalyst has poor stability, for example, easy sintering and aggregation at high temperature and thus hydrogen poisoning, and has higher preparation costs than cheap transition metals. Therefore, the development of a novel catalyst with low-cost, environmentally friendly, less energy consuming, more stable that can achieve ammonia synthesis under mild conditions has become an important research topic in recent times.

### SUMMARY

In view of the problems in the existed ammonia synthesis catalysts, an object of the present disclosure is to provide a porous ammonia synthesis catalyst, preparation method thereof, and use, which can efficiently catalyze ammonia synthesis at low temperature and low pressure conditions, and has an application prospect of replacing the existed industrial ammonia synthesis catalyst.

The technical solution of the present disclosure is: a porous ammonia synthesis catalyst is prepared by a sol-gel method using a metal complex as a templating agent and using a silicon source as a raw material. The metal complex is a compound formed by metal ion and an organic ligand through coordination bond. The metal ion is composed of one or more of boron ion, sodium ion, potassium ion, magnesium ion, calcium ion, barium ion, cesium ion, aluminum ion, zirconium ion, nickel ion, titanium ion, cobalt ion, manganese ion, vanadium ion, chromium ion, iron ion, copper ion, zinc ion, tungsten ion, platinum ion, ruthenium ion, rhodium ion, palladium ion, lanthanum ion, cerium ion, praseodymium ion, samarium ion, neodymium ion, and dysprosium ions mixed in a ratio. The organic ligand is an organic compound containing two or more elements of nitrogen, phosphorus, and oxygen mixed in a ratio.

Further, the organic ligand is preferably a carboxylic acid ligand, and the carboxylic acid ligand is preferably one or more of benzoic acid, pyridine carboxylic acid, terephthalic acid, formic acid, acetic acid, propionic acid, 1-naphthoic acid, and 2-naphthoic acid.

Further, the silicon source is preferably a silicate ester, sodium metasilicate, and chlorosilane; and the silicate ester is preferably one or more of methyl orthosilicate, tetraethyl orthosilicate, tetrabutyl orthosilicate, and tetraisopropyl orthosilicate.

Further, the porous ammonia synthesis catalyst is a silicate catalytic material containing a metal active center, and a molar ratio of silicon to the metal active center is (2 to 100): 1.

Further, the porous ammonia synthesis catalyst has a specific surface area ranging from 50m²/g to 800m²/g and a pore size ranging from 1nm to 10nm.

Further, the porous ammonia synthesis catalyst is an iron-based catalyst. The metal ion is composed of iron ion and other co-catalytic element ions mixed in a ratio. The other co-catalytic element ions are one or more of boron ion, sodium ion, potassium ion, magnesium ion, calcium ion, barium ion, cesium ion, aluminum ion, zirconium ion, nickel ion, titanium ion, cobalt ion, manganese ion, vanadium ion, chromium ion, copper ion, zinc ion, tungsten ion, platinum ion, ruthenium ion, rhodium ion, palladium ion, lanthanum ion, cerium ion, praseodymium ion, samarium ion, neodymium ion, and dysprosium ion. The catalytic efficiency of the catalyst is greatly improved by in-situ introducing an iron active center into the porous metal silicate material and doping different co-catalytic elements.

A preparation method of the porous ammonia synthesis catalyst that is prepared by a sol-gel method, comprises the following steps. A silicon source is added into a metal carboxylate solution, and is stirred to be fully dissolved. Then, the metal carboxylate solution is placed into a hydrothermal reaction vessel, and is placed into an oven for hydrothermal reaction to form a gel. After being dried, the gel is transferred to a muffle furnace to programed-heat to 100°C-1000°C in an air atmosphere, and is calcined at a constant temperature for 1 hours to 24 hours. Or, the gel is placed into a tubular furnace, is heated to 100°C-1000°C in an inert atmosphere, and is calcined at a constant temperature for 1 hours to 24 hours, obtaining the porous ammonia synthesis catalyst.

Further, the metal carboxylate solution is prepared by dissolving a carboxylic acid ligand and a metal salt in a solvent in a molar ratio of (0.5 to 10):1. The metal ion in the metal salt is composed of one or more of boron ion, sodium ion, potassium ion, magnesium ion, calcium ion, barium ion, cesium ion, aluminum ion, zirconium ion, nickel ion, titanium ion, cobalt ion, manganese ion, vanadium ion, chromium ion, iron ion, copper ion, zinc ion, tungsten ion, platinum ion, ruthenium ion, rhodium ion, palladium ion, lanthanum ion, cerium ion, praseodymium ion, samarium ion, neodymium ion, and dysprosium ion mixed in a ratio. The solvent is one or more of water, methanol, ethanol, N,N-dimethylformamide, acetonitrile, and acetone mixed in any ratio.

Further, the metal carboxylate is preferably a benzoate. The metal salt is dissolved in the solvent in a molar ratio of (1 to 5):(0.5 to 1).

Further, the concentration of metal ion in the metal carboxylate solution is 0.1mmol/L to 1mmol/L.

Further, the metal salt is a substance dissolvable in a solvent, e.g., a chloride, a nitrate, an acetate, a sulfate.

Further, the conditions of the hydrothermal reaction are: 80°C to 200°C, 6 hours to 48 hours.

The porous ammonia synthesis catalyst is applied in a synthesis ammonia reaction.

Further, a specific operation is: the porous ammonia synthesis catalyst is mixed with quartz sand and filled into a reactor. The reaction gas is a mixing gas of nitrogen and hydrogen, and a ratio of nitrogen to hydrogen is (0.1 to 10):1. A reaction condition is 0.1MPa to 15MPa. A reaction temperature is 150°C to 450°C. And a reaction space velocity is IL·g⁻¹h·⁻¹ to 72L·g⁻¹·h⁻¹.

Compared with the prior art, the present disclosure has the following effects:
1) the porous ammonia synthesis catalyst of the present disclosure has low preparation cost, simple process, and no pollution;
2) the pore size of the porous ammonia synthesis catalyst can be controlled by adjusting the ratio of silicon to metal ion and the composition of metal ion, resulting in a large specific surface area and uniform pore distribution;
3) the active metal components and structure, particle size, distribution of porous ammonia synthesis catalysts are adjusted by adjusting the ratio of silicon to metal ion, so that it is easy to be controlled and easy to adjust the aggregation degree of the metal active center, thereby improving catalytic efficiency; and
4) when the porous ammonia synthesis catalyst is used to catalyze the ammonia synthesis reaction, the ammonia synthesis reaction has low reaction temperature and pressure, low energy consumption, high catalytic efficiency, high stability, and environmental friendliness, so that the high energy consumption and pollution problems of traditional industrial catalysts can be solved, having important industrial application prospects.

### BRIEF DESCRIPTION OF DRAWINGS

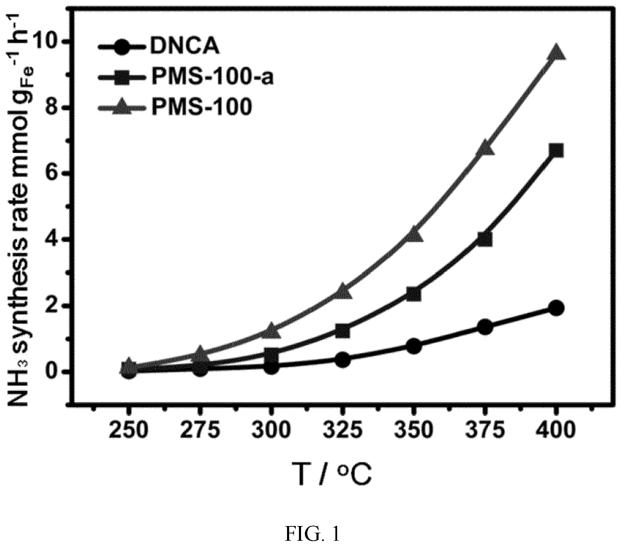

FIG. 1 shows the results of ammonia synthesis catalyzed by PMS-100, PMS-100-a, and DNCA type ammonia synthesis catalysts under different temperature conditions and at a pressure of 2MPa.

### DESCRIPTION OF EMBODIMENTS

The present disclosure provides a porous ammonia synthesis catalyst, its preparation method, and its use. The porous ammonia synthesis catalyst takes porous metal silicate as a skeleton, and the catalytic activity center is composed of one or more metals in proportion, which has low raw material cost, easily prepared catalyst and low energy consumption. When the porous ammonia synthesis catalyst is applied to catalytic synthesis of ammonia, the reaction pressure and temperature are low, the catalytic efficiency is high, the energy consumption is low, pollution is avoided, and the catalyst can be used for a long time with high activity.

The following embodiments will assist in understanding the present disclosure, but the scope of protection of the present disclosure is not limited thereto.

### Example 1

Benzoic acid (13.44mmol), ferric nitrate (2.24mmol), cesium chloride (0.112mmol), and tetraethyl orthosilicate (6.72mmol) were added to a mixing solvent of 4mL of N,N-dimethylformamide and 0.5mL of water, stirred at 120°C for 3 hours, cooled to room temperature, and stirred overnight. The mixture was placed into a hydrothermal reaction vessel, and aged at 160°C for 24 hours to form a gel. The dried gel was transferred to a muffle furnace and calcined at 600°C for 5 hours in an air atmosphere to obtain a solid material named as PMS-100. The porous ammonia synthesis catalyst has a specific surface area of 427m²/g, a uniform pore distribution, and an average pore size of 0.96nm.

### Example 2

Benzoic acid (13.44mmol), ferric nitrate (2.24mmol), and tetraethyl orthosilicate (6.72mmol) were added to a mixing solvent of 4mL of N,N-dimethylformamide and 0.5mL of water, stirred at 120°C for 3 hours, cooled to room temperature, and stirred overnight. The mixture was placed into a hydrothermal reaction vessel, and aged at 160°C for 24 hours to form a gel. The dried gel was transferred to a muffle furnace, and calcined at 600°C for 5 hours in an air atmosphere to obtain a solid material named as PMS-100-a. The porous ammonia synthesis catalyst has a specific surface area of 475m²/g, a uniform pore distribution, and an average pore size of 0.83nm.

### Example 3

Benzoic acid (13.44mmol), ferric nitrate (2.24mmol), calcium chloride (0.112mmol), and tetraethyl orthosilicate (6.72mmol) were added to a mixing solvent of 4mL of N,N-dimethylformamide and 0.5mL of water, stirred at 120°C for 3 hours, cooled to room temperature, and stirred overnight. The mixture was placed into a hydrothermal reaction vessel, and aged at 160°C for 24 hours to form a gel. The dried gel was transferred to a muffle furnace and calcined at 600°C in an air atmosphere to obtain a solid material named as PMS-100-b. The porous ammonia synthesis catalyst has a specific surface area of 456m²/g, a uniform pore distribution, and an average pore size of 0.90nm.

### Example 4

Benzoic acid (13.44mmol), ferric nitrate (2.24mmol), boric acid (0.112mmol), and tetraethyl orthosilicate (6.72mmol) were added to a mixing solvent of 4mL of N,N-dimethylformamide and 0.5mL of water, stirred at 120°C for 3 hours, cooled to room temperature, and stirred overnight. The mixture was placed into a hydrothermal reaction vessel, and aged at 160°C for 24 hours to form a gel. The dried gel was transferred to a muffle furnace, and calcined at 600°C in an air atmosphere to obtain a solid material named as PMS-100-c. The porous ammonia synthesis catalyst has a uniform pore distribution, and a specific surface area and average pore size similar to the material of the aforementioned examples.

### Example 5

Benzoic acid (13.44mmol), ferric nitrate (2.24mmol), aluminum chloride (0.112mmol), and tetraethyl orthosilicate (6.72mmol) were added to a mixing solvent of 4mL of N,N-dimethylformamide and 0.5mL of water, stirred at 120°C for 3 hours, cooled to room temperature, and stirred overnight. The mixture was placed into a hydrothermal reaction vessel, and aged at 160°C for 24 hours to form a gel. The dried gel was transferred to a muffle furnace and calcined at 600°C in an air atmosphere to obtain a solid material named as PMS-100-d. The porous ammonia synthesis catalyst has a uniform pore distribution, and a specific surface area and average pore size similar to the material of the aforementioned examples.

### Example 6

Benzoic acid (13.44mmol), ferric nitrate (2.24mmol), aluminum chloride (0.112mmol), potassium nitrate (0.224mmol), and tetraethyl orthosilicate (6.72mmol) were added to a mixing solvent of 4mL of N,N-dimethylformamide and 0.5mL of water, stirred at 120°C for 3 hours, cooled to room temperature, and stirred overnight. The mixture was placed into a hydrothermal reaction vessel, and aged at 160°C for 24 hours to form a gel. The dried gel was transferred to a muffle furnace, and calcined at 600°C in an air atmosphere to obtain a solid material named as PMS-100-e. The porous ammonia synthesis catalyst has a uniform pore distribution, and a specific surface area and average pore size similar to the material of the aforementioned examples.

### Example 7

Benzoic acid (13.44mmol), ferric nitrate (2.24mmol), chromium nitrate (0.112mmol), and tetraethyl orthosilicate (6.72mmol) were added to a mixing solvent of 4mL of N,N-dimethylformamide and 0.5mL of water, stirred at 120°C for 3 hours, cooled to room temperature, and stirred overnight. The mixture was placed into a hydrothermal reaction vessel, and aged at 160°C for 24 hours to form a gel. The dried gel was transferred to a muffle furnace and calcined at 600°C in an air atmosphere to obtain a solid material named as PMS-100-f. The porous ammonia synthesis catalyst has a uniform pore distribution, and a specific surface area and average pore size similar to the material of the aforementioned examples.

### Example 8

Benzoic acid (13.44mmol), ferric nitrate (2.24mmol), cerium chloride (0.112mmol), and tetraethyl orthosilicate (6.72mmol) were added to a mixing solvent of 4mL of N,N-dimethylformamide and 0.5mL of water, stirred at 120°C for 3 hours, cooled to room temperature, and stirred overnight. The mixture was placed into a hydrothermal reaction vessel, and aged at 160°C for 24 hours to form a gel. The dried gel was transferred to a muffle furnace and calcined at 600°C in an air atmosphere to obtain a solid material named as PMS-100-g. The porous ammonia synthesis catalyst has a uniform pore distribution, and a specific surface area and average pore size similar to the material of the aforementioned examples.

### Example 9

The evaluation of activity of the catalyst was carried out in a high-pressure activity testing device having a reactor with an inner diameter of 8mm. The catalyst prepared in Examples 1-8 or commercial catalyst (see Table 1 for specific amount) was mixed with a certain amount of quartz sand and filled into a stainless steel reactor. The reaction gas was a mixing gas of nitrogen and hydrogen with a nitrogen hydrogen ratio of 1:3, a reaction pressure of 2MPa, a reaction temperature of 350°C, and a reaction space velocity of 9L·g⁻¹·h⁻¹. The reaction gas was absorbed by a dilute sulfuric acid aqueous solution, and the concentration of ammonium ions in the absorption solution was determined by ion chromatography. As shown in Table 1, under the same conditions, when the catalyst of the present disclosure is used for catalytic ammonia synthesis, its catalytic efficiency is much higher than the catalytic efficiency of DNCA type industrial ammonia synthesis catalyst and commercial ruthenium carbon catalyst, indicating that the present disclosure has a good industrial application prospect.

**Table 1: comparison table for performance test results of synthetic ammonia for Examples 1-10, Comparative example 1 and Comparative example 2.**

| Catalyst | Outlet ammonia rate (mmol/g _{Fe}/h or mmol/g _{Ru}/h) | Catalyst | Outlet ammonia rate (mmol/g _{F}e/h or mmol/g _{RU}/h) |
|---|---|---|---|
| 0.1g PMS-100 | 3.08 | 0.2g PMS-100-d | 2.68 |
| 0.3g PMS-100 | 2.69 | 0.2g PMS-100-e | 3.00 |
| 0.2g PMS-100 | 4.10 | 0.2g PMS-100-f | 2.51 |
| 0.2g PMS-100-a | 2.35 | 0.2g PMS-100-g | 3.46 |
| 0.2g PMS-100-b | 3.28 | 0.2g DNCA type of ammonia synthesis catalyst | 0.78 |
| 0.2g PMS-100-c | 2.29 | 0.2g commercial Ru/C catalyst | 2.15 |

### Example 10

0.2g of PMS-100/PMS-100-a/DNCA was mixed with a certain amount of quartz sand respectively and filled in a stainless steel reactor. The reaction gas was a mixing gas of nitrogen and hydrogen with a nitrogen hydrogen ratio of 1:3, a reaction pressure of 2MPa, a reaction temperature from 250°C to 400°C at intervals of 25°C, and a reaction space velocity of 9L·g⁻¹·h⁻¹. The reaction gas was absorbed with a dilute sulfuric acid aqueous solution at each temperature condition, and the concentration of ammonium ions in the absorption solution was determined by ion chromatography. The results are shown in FIG. 1, indicating that the catalytic efficiency of the catalyst of the present disclosure is much higher than the catalytic efficiency of DNCA type industrial ammonia synthesis catalyst.

### Example 11

Benzoic acid (26.88mmol), ferric nitrate (4.48mmol), cobalt nitrate (0.112mmol), and tetraethyl orthosilicate (6.72mmol) were added to a mixing solvent of 4mL of N,N-dimethylformamide and 0.5mL of water, stirred at 120°C for 3 hours, cooled to room temperature, and stirred overnight. The mixture was placed into a hydrothermal reaction vessel, and aged at 100°C for 12 hours to form a gel. The dried gel was transferred to a muffle furnace, and calcined at 400°C for 8 hours in an air atmosphere to obtain a solid material. The porous ammonia synthesis catalyst has a uniform pore distribution, a specific surface area and average pore size similar to the materials of the aforementioned examples, and good ammonia synthesis catalytic efficiency.

### Example 12

Formic acid (13.44mmol), platinum nitrate (1.344mmol), and methyl orthosilicate (6.72mmol) were added to a mixing solvent of 4mL of N,N-dimethylformamide and 0.5mL of water, stirred at 120°C for 3 hours, cooled to room temperature, and stirred overnight. The mixture was placed into a hydrothermal reaction vessel, and aged at 120°C for 16 hours to form a gel. The dried gel was transferred to a muffle furnace, and calcined at 100°C for 24 hours in an air atmosphere to obtain a solid material. The porous ammonia synthesis catalyst has a uniform pore distribution, a specific surface area and average pore size similar to the materials of the aforementioned examples, and good ammonia synthesis catalytic efficiency.

### Example 13

Acetic acid (1.12mmol), cobalt nitrate (2.24mmol), and sodium metasilicate (6.72mmol) were added to 4mL of water, stirred at 100°C for 4 hours, cooled to room temperature, and stirred overnight. The mixture was placed into a hydrothermal reaction vessel, and aged at 200°C for 20 hours to form a gel. The dried gel was transferred to a tubular furnace, and calcined at 600°C for 1hours in a nitrogen atmosphere to obtain a solid material. The porous ammonia synthesis catalyst has a uniform pore distribution, a specific surface area and average pore size similar to the materials of the aforementioned examples, and good ammonia synthesis catalytic efficiency.

### Example 14

Terephthalic acid (13.44mmol), rhodium chloride (2.24mmol), cesium chloride (0.112mmol), and chlorosilane (235.2mmol) were added to a mixing solvent of 4mL of N,N-dimethylformamide and 0.5mL of water, stirred at 120°C for 3 hours, cooled to room temperature, and stirred overnight. The mixture was placed into a hydrothermal reaction vessel, and aged at 160°C for 36 hours to form a gel. The dried gel was transferred to a muffle furnace, and calcined at 600°C for 4.5 hours in an air atmosphere to obtain a solid material. The porous ammonia synthesis catalyst has a uniform pore distribution, a specific surface area and average pore size similar to the materials of the aforementioned examples, and good ammonia synthesis catalytic efficiency.

### Example 15

1-naphthoic acid (13.44mmol), ferric nitrate (2.24mmol), cerium chloride (0.112mmol), and tetraisopropyl orthosilicate (6.72mmol) were added to a mixing solvent of 4mL of N,N-dimethylformamide, and 0.5mL of water, stirred at 120°C for 3 hours, cooled to room temperature, and stirred overnight. The mixture was placed into a hydrothermal reaction vessel, and aged at 200°C for 48hours to form a gel. The dried gel was transferred to a muffle furnace, and calcined at 600°C for 5hour in an air atmosphere to obtain a solid material. The porous ammonia synthesis catalyst has a uniform pore distribution, a specific surface area and average pore size similar to the materials of the aforementioned examples, and good ammonia synthesis catalytic efficiency.

The above is only part of embodiments of the present disclosure, and any equivalent changes and modifications made according to the claims of the patent disclosure shall fall within the scope of the present disclosure.

## Claims

1. A porous ammonia synthesis catalyst prepared by a sol-gel method using a metal complex as a templating agent and using a silicon source as a raw material, wherein the metal complex is a compound formed by metal ion and an organic ligand through coordination bond; the metal ion is composed of one or more of boron ion, sodium ion, potassium ion, magnesium ion, calcium ion, barium ion, cesium ion, aluminum ion, zirconium ion, nickel ion, titanium ion, cobalt ion, manganese ion, vanadium ion, chromium ion, iron ion, copper ion, zinc ion, tungsten ion, platinum ion, ruthenium ion, rhodium ion, palladium ion, lanthanum ion, cerium ion, praseodymium ion, samarium ion, neodymium ion, and dysprosium ion mixed in any ratio; and the organic ligand is an organic compound containing one or more elements of nitrogen, phosphorus, and oxygen.

2. The porous ammonia synthesis catalyst according to claim 1, wherein the organic ligand is a carboxylic acid ligand.

3. The porous ammonia synthesis catalyst according to claim 2, wherein the carboxylic acid ligand is one or more of benzoic acid, pyridine carboxylic acid, terephthalic acid, formic acid, acetic acid, propionic acid, 1-naphthoic acid, and 2-naphthoic acid.

4. The porous ammonia synthesis catalyst according to claim 1, wherein the silicon source is a silicate ester, sodium metasilicate, or chlorosilane; and the silicate ester is one or more of methyl orthosilicate, tetraethyl orthosilicate, tetrabutyl orthosilicate, and tetraisopropyl orthosilicate.

5. The porous ammonia synthesis catalyst according to claim 1, wherein the porous ammonia synthesis catalyst is a silicate catalytic material containing a metal active center, and a molar ratio of silicon to the metal active center ranges from 2: 1 to 100:1.

6. The porous ammonia synthesis catalyst according to claim 1, wherein the porous ammonia synthesis catalyst has a specific surface area ranging from 50m²/g to 800m²/g and a pore size ranging from 1nm to 10nm.

7. The porous ammonia synthesis catalyst according to any one of claims 1-6, wherein the metal ion is composed of iron ion and other co-catalytic element ions mixed in a ratio; and the other co-catalytic element ions are one or more of boron ion, sodium ion, potassium ion, magnesium ion, calcium ion, barium ion, cesium ion, aluminum ion, zirconium ion, nickel ion, titanium ion, cobalt ion, manganese ion, vanadium ion, chromium ion, copper ion, zinc ion, tungsten ion, platinum ion, ruthenium ion, rhodium ion, palladium ion, lanthanum ion, cerium ion, praseodymium ion, samarium ion, neodymium ion, and dysprosium ion.

8. A preparation method of the porous ammonia synthesis catalyst according to claim 1, comprising:
adding a silicon source into a metal carboxylate solution to be fully dissolved, placing into a hydrothermal reaction vessel, and placing in an oven for hydrothermal reaction to form a gel;
drying the gel, transferring the gel to a muffle furnace, programed-heating the gel to 100°C-1000°C in an air atmosphere, and calcining the gel at a constant temperature for 1 hours to 24 hours; or
drying the gel, placing the gel in a tubular furnace, heating the gel up to 100°C -1000°C in an inert atmosphere, and calcining the gel at a constant temperature for 1 hours to 24 hours to obtain the porous ammonia synthesis catalyst.

9. The preparation method of the porous ammonia synthesis catalyst according to claim 8, wherein the metal carboxylate solution is prepared by dissolving a carboxylic acid ligand and a metal salt in a molar ratio of (0.5 to 10): 1 in a solvent; the metal ion in the metal salt is composed of one or more of boron ion, sodium ion, potassium ion, magnesium ion, calcium ion, barium ion, cesium ion, aluminum ion, zirconium ion, nickel ion, titanium ion, cobalt ion, manganese ion, vanadium ion, chromium ion, iron ion, copper ion, zinc ion, tungsten ion, platinum ion, ruthenium ion, rhodium ion, palladium ion, lanthanum ion, cerium ion, praseodymium ion, samarium ion, neodymium ion, and dysprosium ion mixed in a ratio; and the solvent is one or more of water, methanol, ethanol, N,N-dimethylformamide, acetonitrile, and acetone mixed in any ratio.

10. A use of the porous ammonia synthesis catalyst according to any one of claims 1-6 applied in a synthesis ammonia reaction.
